(19) Europäisches Patentamt
European Patent Office
Office européen des brevets

(11) **EP 2 927 914 A1**

(12) **EUROPEAN PATENT APPLICATION**

(43) Date of publication:
07.10.2015 Bulletin 2015/41

(51) Int Cl.:
*H01C 7/12* (2006.01)    *H01C 13/02* (2006.01)

(21) Application number: 15161891.5

(22) Date of filing: 31.03.2015

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
MA

(30) Priority: 31.03.2014 GB 201405753

(71) Applicant: **M&I Materials Limited**
Manchester M32 0ZD (GB)

(72) Inventor: **Robertson, Jeff**
Manchester, Greater Manchester M32 0ZD (GB)

(74) Representative: **Wilson Gunn**
Blackfriars House
The Parsonage
5th Floor
Manchester M3 2JA (GB)

(54) **VARISTOR**

(57) The present invention relates to a unit comprising a plurality of varistors, specifically for the purposes of overvoltage protection in synchronous generator exciter discharge systems. Compared with existing varistor units, the unit of the invention is able to be transported more efficiently, is more compact, and requires fewer individual varistor units to be placed in a synchronous generator exciter discharge system while still achieving the required thermal and electrical ratings to perform to the desired requirements.

Figure 4

EP 2 927 914 A1

**Description**

The present invention relates to a varistor device, specifically for the purposes of overvoltage protection in synchronous generator exciter discharge systems.

An exciter in a synchronous generator is used to provide the DC supply to an electromagnetic field winding which is mounted on the rotor of the generator. In order to prevent damage being sustained to excitation systems during shut down, a suitable means to discharge the energy stored in the field coil must be available. For many years, silicon carbide varistors, such as those manufactured and sold under the trade name Metrosil® by M&I Materials, have provided a reliable solution for exciter discharge applications, and they are used by many leading original equipment manufacturers in world flagship power projects, such as in the Three Gorges dam project on the Yangtze River in China.

Excitation systems that are used on synchronous generators may be in one of two forms. The first is known as a brushless excitation system, which is used on small to medium sized generators. A brushless excitation system consists of a small permanent magnet exciter generator assembled on the rotor shaft of a main generator. The AC output from the exciter generator is rectified into a DC supply to feed the field winding of the main generator. In these forms of excitation systems, the varistors have to be designed to be mounted on the rotor of the generator and rotate with the field winding.

The second type of excitation system used on larger synchronous generators, particularly in hydroelectric schemes, is a static excitation system. In a static excitation system, the DC supply to the field winding is provided through an external source.

A varistor is essentially a resistor, which has non-linear voltage-current characteristics. In comparison to a standard linear resistor, these characteristics allow the conductivity of the varistor to be very low at low voltages and extremely high at high voltages. These characteristics are then useful at suppressing transients and preventing damage to other electrical components or insulation systems.

Transients may be created in electrical systems for a variety of reasons, and may be dissipated or suppressed using a variety of techniques. Complications, however, arise when considering high energy transients, due to thermal dissipations in many devices. High energy transients may occur when either a current surge exists for a long period of time or a large amount of energy is stored in a system, which has to be dissipated. Electromagnetic systems constitute one such system.

When an inductive DC current to the field coil is broken suddenly, the energy stored in the coil tries to maintain the magnitude of the current by creating a large back electromotive force (EMF), which may be many times larger (e.g. 10-20 times larger) than the supply voltage. This back EMF can be calculated from the equation (1) below:

$$V(\text{Back EMF}) = -\,L\,\frac{di}{dt} \qquad\qquad (1)$$

Wherein: L = inductance of the coil; and di/dt = rate of change of current with time.

If uncontrolled, this EMF may be sufficiently large to damage other components in the system, such as insulation or circuit components. It is therefore essential to provide some means for this energy to dissipate itself harmlessly.

A method of controlling the magnitude of the back EMF is to dissipate the energy/current stored in the coil into an appropriate load, consisting of either a resistor or a varistor, such one sold under the Metrosil® brand. These varistors are typically made from silicon carbide. At the instant when the circuit is broken, the current briefly held constant by the inductance of the coil is diverted through the resistor and rapidly decays to zero. During a discharge event, the coil acts as a current source which discharges with time into the load. The voltage generated across the load can then be controlled and is proportional to the resistance of the load and the current flowing through it.

The energy stored in the coil, calculated from the equation (2) below, is then dissipated in the load, heating it up:

$$E = \tfrac{1}{2}\,L I^2 \qquad\qquad (2)$$

Where

L    - Inductance of the Coil

I    - DC Current through the coil

If an ordinary linear resistor is used, this will lead to a much longer discharge time than if a non linear varistor were used.

As well as offering short discharge times, existing varistors can also be used in high energy applications, since they may be easily 'matched'. When in use, existing varistors are used in a unit containing a number of individual varistor discs (*e.g.* 32) connected in series or parallel, in order to achieve the desired cumulative degree of electrical capacity.

'Matching' describes how the variation in the electrical properties of the individual varistor discs determines the sharing of current and energy within a multi disc varistor unit. It is important that the discs that are selected to be used together in any one unit of varistors all lie within a defined voltage range for an applied current. The requirements for the voltage matching range are dependent on the degree of non-linearity ($\beta$ or $\alpha$ - see equations (3) and (4) hereinbelow) of the V-I (voltage-current) characteristics of the varistor. Should the varistors within any one unit of *e.g.* 32 not be matched accordingly, this may lead to uneven current and energy distributions within the unit, limiting the rating of the unit or possibly even leading to failure. Assuming the silicon carbide varistors have a beta in the region of 0.4, for a 5% matching of the discs on voltage (*i.e.* where there is a 5% variation in voltage between the discs), this corresponds to a 13% variation in current, which leads to a similar variation in the amount of energy and heat dissipated in the discs, as well as an uneven temperature distribution within the unit. Difficulties in matching with highly non-linear varistors limit their utilisation to low energy applications.

The primary consequential effect of having a low degree of matching is that the unit energy rating per disc must be reduced to prevent excessive heating within the unit. Severe overheating of the varistors, such as well beyond 200°C, may lead to a permanent change in the V-I characteristics of the discs. If the unit has not been rated correctly with regards to matching, then this may lead to thermal runaway effects due to the imbalance of the current and energy dissipation in the unit.

The existing Metrosil® varistors offer a high speed solution to the discharge of excitation systems, due to the degree of non-linearity in the V-I characteristics of the varistors. As mentioned above, the present solution involves using a unit containing as many as 32 or more individual varistor discs connected in series or parallel, in order to achieve the desired cumulative degree of electrical capacity.

The varistor discs presently used in excitation systems are circular in shape, typically varying between 25 mm to 150 mm in diameter, and are supplied as plain unmounted discs to be arranged into multidisc assemblies arranged in series or parallel. If necessary, they are supplied with suitable wire terminations and encapsulated in PVC or other materials as required.

However, there remains a need for a varistor unit which enables fewer individual varistors to be required in a varistor unit in a synchronous generator exciter discharge system while still achieving the required thermal and electrical ratings to perform to the desired standard, and also for a varistor unit that is able to be stored and transported more efficiently. These needs are met by the present invention.

Therefore, in accordance with the invention, there is provided a unit containing from about 1 to about 32 individual varistors, the varistors being square or rectangular in shape.

Typically, the varistor is rectangular in shape.

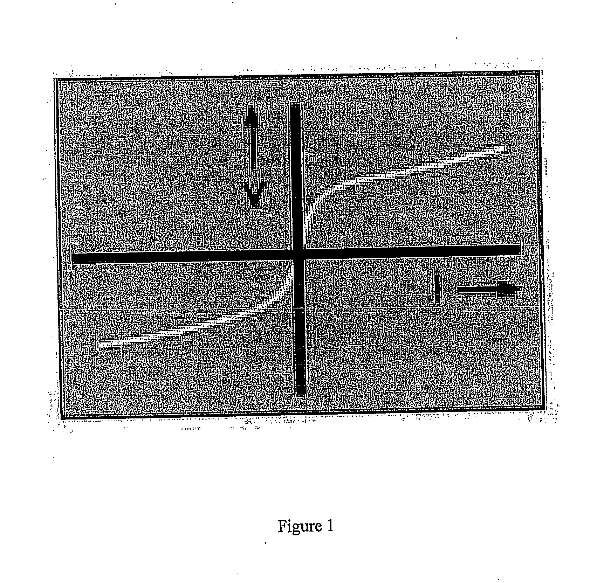

By 'rectangular' or 'square' within the meaning of the present invention is also meant a shape wherein the corners of a conventional rectangle or square are rounded, such as in the form depicted in Figure 1, as well as where the corners form right angles.

The unit of the invention is able to achieve the required thermal and electrical ratings of the unit, in a compact footprint size.

To be able to achieve the required thermal and electrical ratings, the varistor unit only needs to comprise 22 rectangular (or square) varistor plates, arranged in parallel. A rectangular varistor according to the invention will typically have a length of between about 75 mm to about 250 mm along its longer side, more typically between about 100 mm to about 225 mm, more typically between about 125 mm to about 200 mm, more typically between about 150 mm to about 190 mm. One typical length is about180 mm. Along the shorter side, the length is typically between about 50 mm to about 225 mm more typically between about 75 mm to about 200 mm, more typically between about 100 mm to about 175 mm, more typically between about 125 mm to about 160 mm. One typical length is about 150 mm. When the varistor is square in shape, its sides are typically between about 50 mm to about 250 mm, more typically between about 75 mm to about 225 mm, more typically between about 100 mm to about 200 mm, more typically between about 125 mm to about 175 mm.

A square varistor according to the invention will typically have sides measuring between about 75 mm and about 250 mm.

The varistors are supported using a central stud or rod, which extends through holes in the plates; the stud or rod is supported at least at either end thereof. In comparison, to achieve the same levels of thermal and electrical ratings, as many as 32 of the circular-shaped varistor discs are required. Each of the rectangular varistor plates has a capacity that is about 1.5 times greater than the capacity of a regular 150 mm circular-shaped varistor disc.

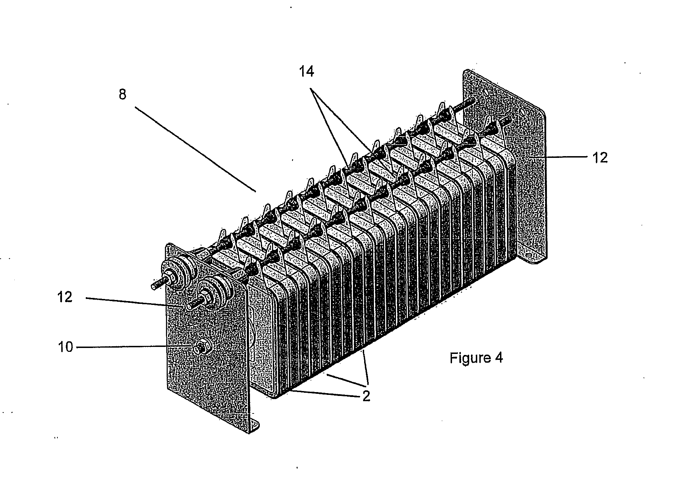

Further, the rectangular (or square) varistor plates decreases the weight of any varistor unit of the invention as less units are used, as well as decreasing the amount of space that is required to store and transport the varistors required for a single varistor unit. This is because when a unit containing 32 individual varistor plates is to be transported, due to its weight, it needs to be transported as two separate units each containing 16 individual varistor plates, to prevent the central mounting stud from sagging in the middle if it is only supported at each end. Also, due to the length of the 32-disc unit, there are problems with storage space. As a result, there is extra weight due to the extra support structure required to hold the individual varistor plates in place within the unit. Such a support structure can be seen, for example, in Figure 4 below. The shapes of the rectangular (or square) varistor plates enable the varistors to be more efficiently packed and stored, either for use or for transportation, without wasting space; this is a problem with the circular-shaped varistor discs.

According to one embodiment of the invention, the varistors used in the unit comprise silicon carbide. According to another embodiment of the invention, the varistors used in the unit comprise zinc oxide. Silicon carbide is typically used, due to the β value of zinc oxide (~0.05) being much smaller than that of silicon carbide. As a result of the lower β value of zinc oxide, the matching of the zinc oxide varistors is far more critical. A variation of 5% in the voltage matching range of zinc oxide varistors leads to a variation in the current (and energy) in the varistors of up to 160%, compared with only 13% for a silicon carbide varistor. In order for the discs to be able to operate with such a variation in current, then the varistors must be drastically derated, which then often leads to the de-excitation units being excessively large in size. Despite long term aging/heating effects causing only minor changes in the voltage matching of the zinc oxide varistors, this may lead to large variations of the current and energy distribution of the varistors within the unit. In more extreme cases, uneven current distributions may lead to failure or flashover of the unit.

When designing a varistor for an exciter discharge application, a range of parameters must be specified, including:

- Required protection voltage;
- Maximum discharge current from the field coil;
- Energy stored in the field coil

The required protection voltage is the voltage which the varistors limit the system to when the maximum discharge current flows from the coil into the varistor unit. In the discharge current-time characteristics, this maximum current occurs as soon as the discharge resistor is switched in. Under normal discharge conditions, the magnitude of this current is equal to the magnetising current used in the excitation of the field winding.

The discharge energy is the energy stored in the field winding, which is to be dissipated in the varistor unit, and may be approximately calculated through equation (2) above.

Both of the silicon carbide varistors and zinc oxide varistors according to the invention allow the systems to have much shorter discharge times than linear resistors.

The unit of the invention is to be used in conjunction with the excitation system discharge circuit to perform the following three functions within the system:

- Allow a rapid decay in the excitation field current;
- Limit the magnitude of the back EMF;
- Provide a medium in which the energy in the excitation field winding can be absorbed.

The silicon carbide varistors used in the unit of the invention have a negative temperature coefficient of resistance. When a voltage is applied to a varistor, under normal operating conditions in a permanently connected exciter discharge system, the current increases with temperature. Between 0°C and 100°C, the current at a constant voltage increases by about 0.6% per °C. The beneficial effect to this negative coefficient of resistance is that when the varistors are subject to a constant current source, as in a discharge event, the voltage decreases as the temperature of the varistors increases. In the varistor of the invention, the voltage at a constant current falls by about 0.12% per °C. The specific heat of the material is about 0.84 J/gK and the density is about 2.35g/cm$^3$ with slight variations depending on the precise specification. In exciter applications, however, the current decays in a rapid manner once the discharge system has been switched in. As such, the voltage, which evolves across the varistors, also decays rapidly.

The maximum permissible continuous temperature of a mounted varistor is typically limited to about 200°C by the type of insulation used. However, other grades of insulation can permit higher running temperatures and forced air-cooling or immersion in insulating oil can be used to increase the varistor rating.

According to another embodiment of the invention, there is provided a unit containing from about 10 to about 30, typically from about 15 to 25 varistors, more typically from about 20 to 25 varistors. Typically, the complete varistor unit comprises 22 individual varistor plates according to the invention, and possesses the following electrical design parameters:

- V Between 1100 -1500 V @ 8000 A;

- E rating = 2000 kJ (Based on multiple units being subject to a one off/rare discharge event);
- Insulation Flash Test Voltage of 8000 V

The varistors in the unit of the invention are typically electrically connected in parallel, rather than in series. When arranged in parallel, the matching of each varistor's electrical properties becomes of particular importance, and is easier to achieve for silicon carbide varistors than for zinc oxide varistors.

Although the varistors in any given unit are typically electrically connected in parallel, one or more complete units according to the invention may then subsequently be electrically connected together in parallel or series, as demanded by the specific application they are to be used for.

According to another embodiment of the invention, there is provided a generator comprising one or more varistors according to the invention as detailed hereinabove.

According to another embodiment of the invention, there is provided a method of manufacturing a unit of the invention as detailed hereinabove, the method comprising the steps of:

i) Pressing the raw materials into a plate having the desired shape;
ii) Firing the plate;
iii) Spraying the plate with a conductive metal; and
iv) Arranging from about 1 to about 32 varistors in a single unit

According to another embodiment of the invention, there is provided a use of a unit according to the invention as detailed hereinabove in the dissipation of electrical current.

The invention will now be described further by way of example with reference to the following Figures which are intended to be illustrative only and in no way limiting upon the scope of the invention.

Figure 1 shows a graph of the voltage-current relationship of a single varistor used in the unit of the invention.
Figure 2 shows a front-on representation of an individual varistor plate used in the unit of the invention.
Figure 3 shows a slightly side-on representation of an individual varistor plate used in the unit of the invention.
Figure 4 shows a representation of a complete varistor unit according to the invention containing 22 individual varistor plates.

It can be seen in Figure 1 that the voltage-current relationship of the varistor of the invention is symmetrical. Traditionally, the relationship is expressed by the equations (3) and (4):

$$V = CI^{\beta} \qquad (3)$$

$$I = HV^{\alpha} \qquad (4)$$

Wherein:

V = terminal voltage of the non-linear resistor
I = current through the non-linear resistor
C = voltage across the non-linear resistor for 1A current flow
H = current through the non-linear resistor for 1 V
$\beta$ and $\alpha$ = non-linearity factor ($\beta = 1/\alpha$)

The 'C' value of varistors largely depends upon the geometry of the varistor and the manufacturing methods employed in the production thereof, as well as the number of discs in series or parallel, whilst the '$\beta$' value is largely dependent upon the material makeup of the varistors and the working electrical stress. The varistor of the invention is typically produced with a continuous range of C values and $\beta$ values in the range of about 0.25 to about 0.5.

By selecting different thickness of varistor, using different manufacturing processes and materials, it is possible to both vary C and $\beta$ independently for different discharge current and required protection voltages.

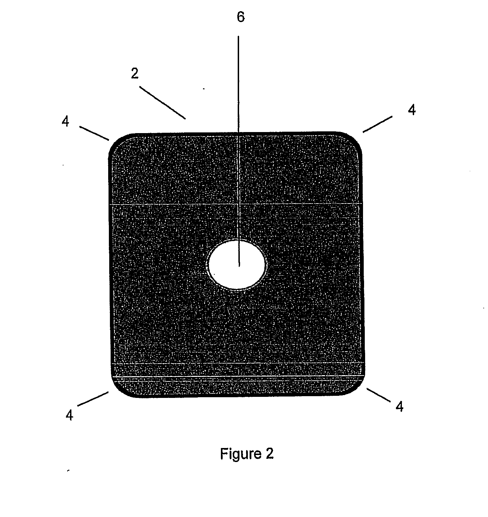

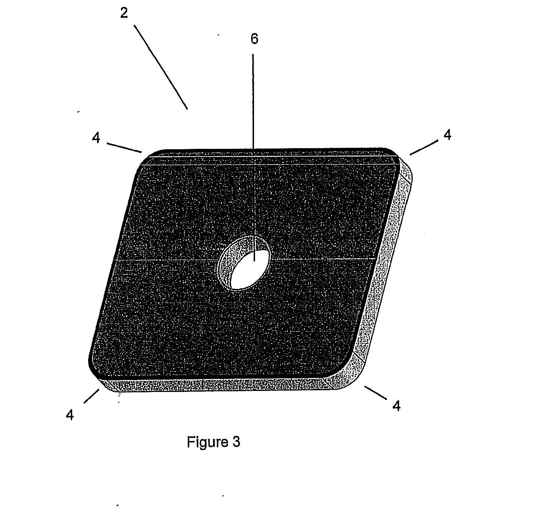

Figures 2 and 3 show front-on and slightly side-on representations of an individual varistor plate 2. In these representations, the corners 4 are rounded, as described above, and there is a cavity 6 in the centre of the plate, through which a supporting rod (not shown) is threaded as part of a support structure (also not shown) to keep the individual varistors in line.

In Figure 4, the 22 individual varistor plates 2 are lined up in parallel to form a complete varistor unit 8. The plates 2 are mounted on a rod 10 extending lengthways through the cavities 6 of all of the plates 2, the rod 10 itself being supported by two opposing vertical support members 12 at either end of the row of varistor plates. Also supporting the plates 2 are two further rods 14 which each extend above the plates 2 parallel to the central rod 10.

It is of course to be understood that the present invention is not intended to be restricted to the foregoing specific embodiments, which are described by way of example only.

**Claims**

1. A unit containing from about 1 to about 32 varistors, the varistors being square or rectangular in shape.

2. A unit according to claim 1, wherein the unit containing from about 15 to about 30 varistors.

3. A unit according to claim 1, wherein the unit containing from about 20 to about 25 varistors.

4. A unit according to any preceding claim, wherein the varistors comprise silicon carbide or zinc oxide.

5. A unit according to any preceding claim, wherein the varistors are rectangular in shape.

6. A unit according to claim 5, wherein the varistors are rectangular in shape and have a length of between about 75 mm to about 250 mm along its longer side and a length of between about 50 mm to about 225 mm along its shorter side.

7. A unit according to any of claims 1-4, wherein the varistors are square in shape and have sides having lengths of between about 75 mm to about 250 mm.

8. A unit according to any preceding claim, wherein the varistors in the unit are electrically connected in parallel.

9. A generator comprising a unit according to any preceding claim.

10. A method of manufacturing a unit according to any of claims 1-9, comprising the steps of:

   i) Pressing the raw materials for making an individual varistor into a plate having the desired shape;
   ii) Firing the plate;
   iii) Spraying the plate with a conductive metal; and
   iv) Arranging from about 1 to about 32 varistors in a single unit.

11. Use of a unit according to any of claims 1-9 in the dissipation of electrical current.

12. A unit, method or use substantially as described herein.

Figure 1

Figure 2

Figure 3

Figure 4

Europäisches
Patentamt

European
Patent Office

Office européen
des brevets

## EUROPEAN SEARCH REPORT

Application Number

EP 15 16 1891

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 548 468 A (SHIRAKAWA SHINGO [JP] ET AL) 20 August 1996 (1996-08-20) * column 6, line 22 - line 53; figure 9 * ----- | 1-6,8,9, 11,12 | INV. H01C7/12 H01C13/02 |
| X | DE 24 59 599 A1 (SIEMENS AG) 16 June 1976 (1976-06-16) * page 9; figures 8,9 * ----- | 1-7, 10-12 | |
| X | DE 20 2012 101040 U1 (SALTEK S R O [CZ]) 8 March 2013 (2013-03-08) * paragraphs [0057] - [0059]; figures 7,15 * ----- | 1-3 | |
| X | JP H03 198301 A (MITSUBISHI MATERIALS CORP) 29 August 1991 (1991-08-29) * the whole document * ----- | 1-5 | |
| X | CN 203 300 351 U (LONGKE ELECTRONICS) 20 November 2013 (2013-11-20) * the whole document * ----- | 1-9,11, 12 | |

| | | | TECHNICAL FIELDS SEARCHED (IPC) |
|---|---|---|---|
| | | | H01C H02P H02H |

The present search report has been drawn up for all claims

| Place of search | Date of completion of the search | Examiner |
|---|---|---|
| Munich | 27 July 2015 | Roesch, Guillaume |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**     EP 15 16 1891

This annex lists the patent family members relating to the patent documents cited in the above-mentioned European search report.
The members are as contained in the European Patent Office EDP file on
The European Patent Office is in no way liable for these particulars which are merely given for the purpose of information.

27-07-2015

| Patent document cited in search report | | Publication date | Patent family member(s) | | Publication date |
|---|---|---|---|---|---|
| US 5548468 | A | 20-08-1996 | CN | 1100837 A | 29-03-1995 |
| | | | DE | 69401173 D1 | 30-01-1997 |
| | | | DE | 69401173 T2 | 12-06-1997 |
| | | | EP | 0634757 A1 | 18-01-1995 |
| | | | JP | 2996059 B2 | 27-12-1999 |
| | | | JP | H0729665 A | 31-01-1995 |
| | | | US | 5548468 A | 20-08-1996 |
| DE 2459599 | A1 | 16-06-1976 | NONE | | |
| DE 202012101040 | U1 | 08-03-2013 | CZ | 22221 U1 | 25-05-2011 |
| | | | DE | 202012101040 U1 | 08-03-2013 |
| | | | IT | MI20120132 U1 | 02-10-2012 |
| | | | SI | 23713 A2 | 30-10-2012 |
| | | | SK | 500182012 U1 | 04-06-2012 |
| JP H03198301 | A | 29-08-1991 | JP | 2794312 B2 | 03-09-1998 |
| | | | JP | H03198301 A | 29-08-1991 |
| CN 203300351 | U | 20-11-2013 | NONE | | |

EPO FORM P0459

For more details about this annex : see Official Journal of the European Patent Office, No. 12/82